# EUROPEAN PATENT APPLICATION

(11) **EP 1 995 969 A2**
(43) Date of publication of application: **26.11.2008**
(21) Application number: 08151909.2
(22) Date of filing: 25.02.2008
(51) Int. Cl.: H04N 7/24, G11B 27/32, G11B 27/34, H04N 5/76

(54) **Method of managing image files and image apparatus employing the same**

(30) Priority: 25.05.2007 KR 20070050841
(71) Applicant: Samsung Electronics Co., Ltd., Suwon-si, Gyeonggi-do 442-742 (KR)
(72) Inventor: Kim, Da-rae, Gyeonggi-do (KR)
(74) Representative: Robinson, Ian Michael

(57) **Abstract**

A method for managing image files to delete a partially played-back image file and an image apparatus employing the same are provided. Based on a playback time information, a part of the partially played-back image file is deleted from stored image files. Accordingly, the part a user has watched can be deleted from the image file.

## Description

### BACKGROUND OF THE INVENTION

### 1. Field of the Invention:

Methods and apparatuses consistent with the present invention relate to a method for managing image files and an image apparatus employing the same, and more particularly, to a method for managing image files to delete an image file and an image apparatus employing the same.

### 2. Description of the Related Art:

With the rapid development of digital broadcasting technologies, a personal video recorder (PVR), which uses a storage device such as a hard disk drive (HDD) to store image files in combination with computer technologies, has been increasingly used. The PVR is a personal motion picture file storage device that stores received broadcast signals to the HDD in a digital format in substitute for the existing video tape.

Such a PVR records a broadcast such as a broadcast for ground wave TV, cable TV, or satellite TV in a digital format. If a pause command is input during the playback of the broadcast, it can record the broadcast, that is being viewed, until a playback command is input. Accordingly, even if a user presses a pause button and a predetermined time lapses from that time, the user can continue watching where the user left off. During this time, the broadcast signals are stored to a storage device such as an HDD between the time that a pause command is input and the time that a playback command is input.

If the storage device of an image recording apparatus or image apparatus such as a PVR is full with image files, an image file must either be manually selected and deleted by the user, or automatically selected and deleted in date order from among previously recorded images files.

Users wish to find a more convenient and more effective method for managing files in the image apparatus, and accordingly, a method for managing files more conveniently and more effectively has been demanded.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides a method for managing image files which is capable of deleting a "partially played-back image file," thereby providing a convenient and effective method for managing image files to users, and an image apparatus employing the same.

According to an aspect of the present invention, there is provided a method for managing image files, comprising: calculating playback time information about stored image files; and based on the playback time information, deleting a part of a partially played-back image file, which is an image file having a once played-back part, from the stored image files.

The deleting may comprise deleting the part of the partially played-back image file if a remaining capacity required to store image files is less than a predetermined value.

The deleted part of the partially played-back image file may be the once played-back part of the partially played-back image file.

The playback time information may comprise a stop time indicating when a playback is stopped, and the deleting may comprise deleting the part of the partially played-back image file based on a start time and the stop time of the partially played-back image file.

The stop time may be calculated based on an index file or packet element stream (PES) header information pertaining to the partially played-back image file.

The PES header information may comprise a presentation time stamp (PTS) value.

The method may further comprise selecting at least one deletion target image file from the partially played-back image files based on a playback time ratio which is a ratio of an elapsed playback time to a total playback time of the partially played-back image file, and the deleting may comprise deleting a part of the selected deletion target image file.

The selecting may comprise selecting at least one deletion target image file from the partially played-back image files based at least in part on how high the playback time ratio of each stored image file is in comparison to the playback time ratios of other stored image files.

The elapsed playback time may be calculated by dividing a difference between a start frame count and a stop frame count by a frame frequency.

The start frame count and the stop frame count may be calculated based on the PTS value which is part of the PES header information.

According to another aspect of the present invention, there is provided a method for managing image files, comprising: selecting at least one deletion target image file from stored image files based on a playback time ratio of an partially played-back image file which is an image file having a once played-back part; and deleting the selected deletion target image file.

The selecting may comprise selecting at least one deletion target image file from the among stored image files based at least in part on how high the playback time ratio of each stored image file is in comparison to the playback time ratios of other stored image files.

The deleting may comprise deleting the selected deletion target image file if a remaining capacity required to store image files is less than a predetermined value.

According to another aspect of the present invention, there is provided an image apparatus comprising: a storage unit which stores image files; and a controller which deletes a part of a partially played-back image file which is an image file having a once played-back part from the storage unit.

The controller may delete the part of the partially played-back image file from the storage unit if a remaining capacity of the storage unit is less than a predetermined value.

The deleted part of the partially played-back image file may be the once played-back part of the partially played-back image file.

The controller may delete the part of the partially played-back image file based on a playback start time and a stop time of the partially played-back image file.

The stop time may be calculated based on an index file or packet element stream (PES) header information pertaining to the partially played-back image file.

The image apparatus may comprise a personal video recorder.

The controller may select at least one deletion target image file from the partially played-back image files based on a playback time ratio which is a ratio of an elapsed playback time to a total playback time of the partially played-back image file, and delete a part of the selected deletion target image file from the storage unit.

The controller may select at least one deletion target image file from the partially played-back image files based at least in part on how high the playback time ratio of each stored image file is in comparison to the playback time ratios of other stored image files.

According to another aspect of the present invention, there is provided an image apparatus comprising: a storage unit which stores image files; and a controller which selects at least one deletion target image file from the stored image files based on a playback time ratio of a partially played-back image file which is an image file having a once played-back part, and deletes the selected deletion target image file from the storage unit.

The controller may select at least one deletion target image file from the stored image files based at least in part on how high the playback time ratio of each stored image file is in comparison to the playback time ratios of other stored image files.

The controller may delete the selected deletion target image file from the storage unit if a remaining capacity of the storage unit is less than a predetermined value.

If an automatic deletion function is applied, there is a problem that image files the user has recorded but still has not watched may be automatically deleted. Also, if a manual deletion function is applied, there is a problem that a user may feel it inconvenient to select image files to delete. Also, the user must remember which image files the user has watched, which causes inconvenience to the user. However, the example embodiments of the invention overcome these difficulties as will be discussed in detail below.

### BRIEF DESCRIPTION OF THE DRAWINGS

The above and/or other aspects of the present invention will be more apparent by describing certain exemplary embodiments of the present invention with reference to the accompanying drawings, in which:
FIG. 1 is a block diagram illustrating a personal video recorder (PVR) to which an exemplary embodiment of the present invention is applicable;
FIG. 2 is a flowchart illustrating a method for managing image files to delete a partially played-back image file according to an exemplary embodiment of the present invention;
FIG. 3 is a view illustrating partially played-back image files according to an exemplary embodiment of the present invention;
FIG. 4 is a block diagram illustrating an image apparatus according to another exemplary embodiment of the present invention;
FIG. 5 is a flowchart illustrating a method for managing image files to delete a partially played-back image file according to another exemplary embodiment of the present invention;
FIG. 6 is a block diagram illustrating an image apparatus according to still another exemplary embodiment of the present invention; and
FIG. 7 is a flowchart illustrating a method for managing image files to delete a partially played-back image file according to still another exemplary embodiment of the present invention.

### DETAILED DESCRIPTION OF EXEMPLARY EMBODIMENTS

Certain exemplary embodiments of the present invention will be described in greater detail with reference to the accompanying drawings.

In the following description, the same drawing reference numerals are used for the same elements even in different drawings. The matters defined in the description, such as detailed construction and elements, are provided to assist in a comprehensive understanding of the invention. Thus, it is apparent that the present invention can be carried out without those specifically defined matters. Also, well-known functions or constructions are not described in detail since they would obscure the invention with unnecessary detail.

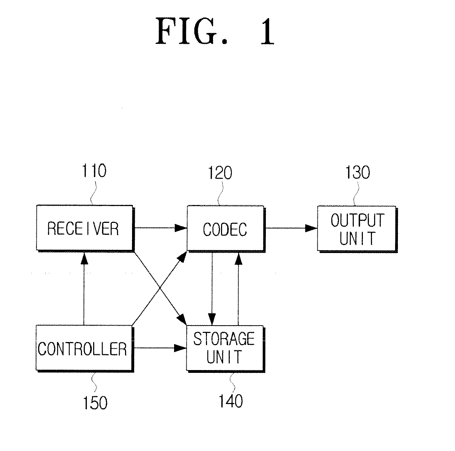

FIG. 1 is a block diagram illustrating a personal video recorder (PVR) to which an exemplary embodiment of the present invention is applicable. As shown in FIG. 1, the PVR comprises a receiver 110, a codec 120, an output unit 130, a storage unit 140, and a controller 150.

The receiver 110 receives image signals through an external device such as a DTV or set-top box. The received image signals are transmitted to the codec 120 or the storage unit 140 according to their types. In particular, non-compressed image signals are transmitted to the codec 120, whereas compressed image signals are directly transmitted to the storage unit 140.

The codec 120 converts the received image signals to signals of format suitable for being watched or stored. If non-compressed image signals are received at the receiver, the codec 120 compresses the image signals and transmits them to the storage unit 140. Also, when image signals stored to the storage unit 130 are output, the codec 120 decompresses the image signals stored in the storage unit 130 and transmits the decompressed image signals to the output unit 130.

The output unit 130 outputs decoded image signals. The output image signals are transmitted to an external display device (not shown) to be watched by a user. Also, the output image signals may be displayed on a display device (not shown) mounted in the PVR.

The storage unit 140 stores the image signals received at the receiver 110 in a compressed format. In general, the PVR uses a hard disk drive as a storage medium. However, besides the hard disk drive, a flash memory, a CD, a DVD and other storage medium known in the art may be used as a storage medium for the storage unit 140.

Also, although in this embodiment the storage unit 140 stores the image signals received at the receiver 110, the storage unit 140 may store image files received from another external storage medium.

The controller 150 controls entire operations of the receiver 110, the codec 120, and the storage unit 140. For example, if a record command signal for the received image signals is input from an input unit (not shown), the controller 150 controls the receiver 110, the codec 120, and the storage unit 140 such that the received image signals are recorded. At this time, if a remaining capacity is insufficient to store the received image signals, the controller 150 controls the storage unit 140 such that an image file of the storage unit 140 is deleted and a capacity remains sufficient.

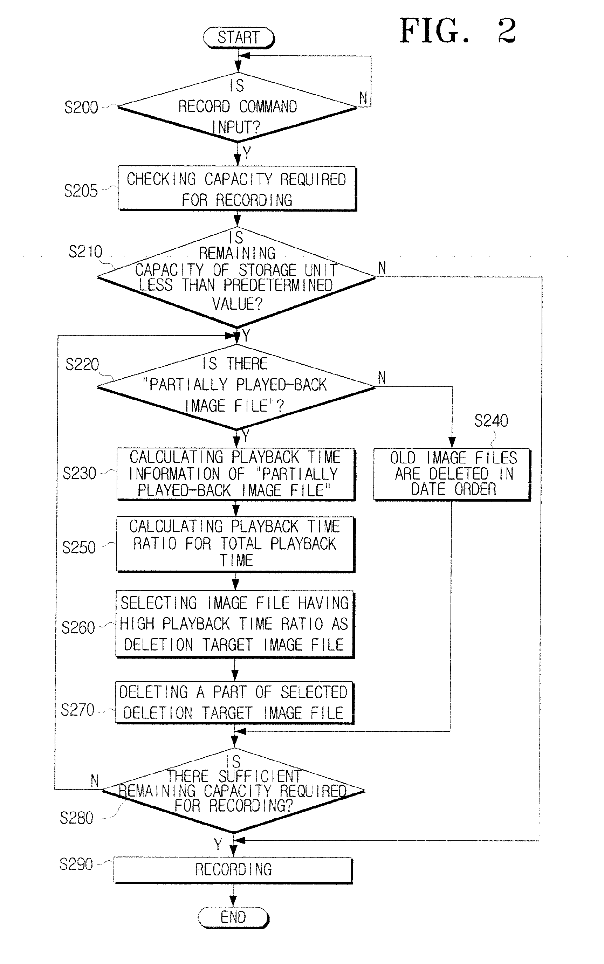

Also, if there is a partially played-back image file in the storage unit 140, which is an image file having a once played-back part for the total playback time, the controller 150 controls the storage unit 140 such that a part of the partially played-back image file is deleted from the storage unit 140 and thus the capacity remains sufficient. This will be described in detail with reference to FIG. 2.

FIG. 2 is a flowchart illustrating a method for managing image files to delete a partially played-back image file according to an exemplary embodiment of the present invention.

As shown in FIG. 2, it is determined whether a user inputs a record command to the PVR or not (S200). If it is determined that a record command is input (S200-Y), the controller 150 of the PVR checks a capacity required for the recording (S205). Based on this, the controller 150 determines whether a remaining capacity of the storage unit 140 is less than a predetermined value or not prior to recording received image signals (S210). For example, the predetermined value is 100MB or a capacity value required to record the image signals. If the remaining capacity of the storage unit 140 is not less than the predetermined value (S210-N), that is, if the remaining capacity is greater than the predetermined value, it is determined that there is a sufficient space to record the image signals. Accordingly, operation of recording the image signals is performed without deleting any image file stored in the storage unit 140 (S290).

On the other hand, if the remaining capacity of the storage unit 140 is less than the predetermined value (S210-Y), it is determined that there is not sufficient space to record the image signals and operation of deleting a stored image file is required.

The controller 150 determines whether there is a partially played-back image file in the storage unit 140, which is an image file having a once played-back part for the total playback time (S220). If there is no partially played-back image file (S220-N), old image files are deleted in date order (S240).

If there is a partially played-back image file (S220-Y), playback time information of the partially played-back image file is calculated (S230). The playback time information includes a start time and an end point that the image file itself stores, and also a stop time indicating when the playback of the image file was stopped. Also, the playback time information includes information about the total playback time and the elapsed playback time of the image file.

The stop time of the image file is calculated based on an index file or a packet element stream (PES) header information for the image file.

The index file for the image file includes a unique number given to each frame of the image. In general, the PVR stores the images files to the storage unit 140 along with their respective index files. Accordingly, the stop time is calculated based on the unique number given to the frame corresponding to the time that the playback of the image file is stopped. In other words, an index file for each image file may exist, or a single index file for all of the stored image files may exist.

The PES header information of the image file includes a presentation time stamp (PTS) value. The PES is a basic unit of the image file and one PES consists of header information and one or more frames. The PTS value included in the PES header information indicates time information about each frame of the image file. Accordingly, the stop time is calculated based on the PTS value of the PES corresponding to the time that the playback is stopped.

As described above, the playback stop time of the partially played-back image file is calculated based on the index file or PES header information.

Next, based on the playback time information calculated as above, a playback time ratio, which is a ratio of an elapsed playback time to a total playback time of the partially played-back image file, is calculated (S250).

The "elapsed playback time" is calculated by dividing a difference between a start frame count and a stop frame count by a frame frequency. Also, the start frame count and the stop frame count are calculated based on the PTS value included in the PES header information.

The difference between the start frame count and the stop frame count corresponds to the number of frames located between a start frame and a stop frame. The reciprocal number of the frame frequency corresponds to the period of the frame, i.e., the period during which one frame is maintained. Accordingly, a value obtained by dividing the difference between the start frame count and the stop frame count by the frame frequency equals to a value obtained by multiplying the number of frames between the start frame and the stop frame by the period of the frame. This value is the "elapsed playback time."

Alternatively, the elapsed playback time may be calculated based on a difference between the playback start time and the playback stop time.

Based on the elapsed playback time, the playback time ratio, which is a ratio of the elapsed playback time to the total playback time of the partially played-back image file, is calculated.

Next, at least one deletion target image file is selected from the image files stored in the storage unit 140 such that an image file having a relatively high playback time ratio is firstly deleted (S260). A part of the selected deletion target image file that has been played back is deleted (S270).

The controller 150 determines whether there is a sufficient remaining capacity required for the recording or not (S280). If the remaining capacity is not sufficient, operation to select a file to delete resumes at S220 (S280-N).

If the remaining capacity is sufficient for recording the image signals (S280-Y), the image signals are recorded (S290).

Up to now, the method for managing image files to delete a partially played-back image file according to the exemplary embodiment of the present invention was described with reference to FIG. 2.

In this embodiment, if there is no partially played-back image file (S220-N), old image files are deleted in date order. However, this is merely an example for the convenience of explanation and other criteria may be adopted in deleting the image files. For example, the image files may be deleted in size order or in order a user prefers.

In this embodiment, a part of a selected deletion target image file that has been played back is deleted in operation S270. However, this is merely an example for the convenience of explanation and any part of the selected deletion target image file may be deleted. For example, a half of the part that has been played back may be deleted or a part that has been played back may be deleted except for the last 10 minutes of the previously played back part.

Also, in this embodiment, in operation S260, at least one deletion target image file is selected from the stored image files such that an image file having a relatively high playback time ratio is firstly deleted. Also, in operation S270, a part of the selected deletion target image file that has been played back is deleted. However, this is merely an example and a deletion target image file may be selected in other ways.

For example, at least one deletion target image file may be selected from the stored image files such that an image file having a long playback time or a big file size is firstly selected.

Also, a list of image files that are selected to be deleted may be displayed in order for a user to directly select an image file to delete.

Also, a user may have the option to delete a part of the selected image file or delete the whole selected image file.

Also, the storage unit 140 may store a history of the deleted image files such that the history of the deleted image files may be displayed when a user wishes.

In this embodiment, if the remaining capacity is not sufficient (S280-N), operation to select an image file to delete resumes at S220. However, this is merely an example for the convenience of explanation and other methods may be adopted.

For example, if there is still insufficient remaining capacity although a part of the deletion target image file has been deleted, another part of the same image file may be deleted.

Alternatively, after a part of the deletion target image file has been deleted, if there is still insufficient remaining capacity, a different deletion target image file may be deleted.

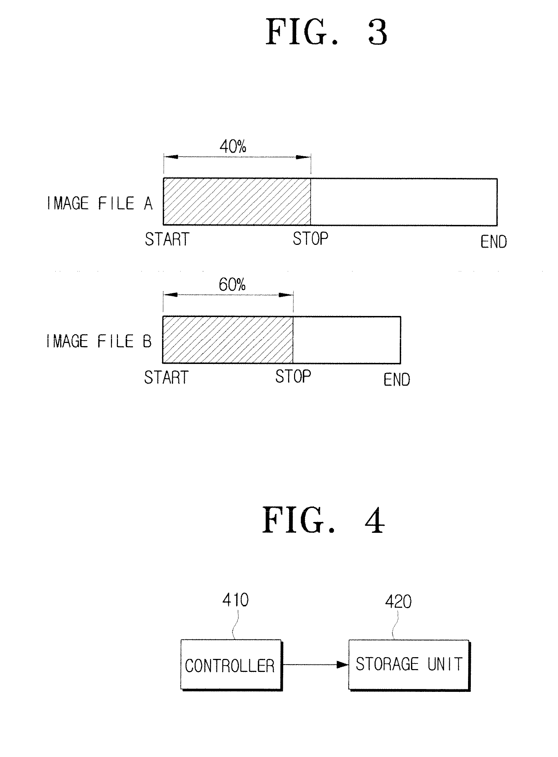

Hereafter, operations of calculating the playback time ratio of the partially played-back image file and determining the deletion target image file will be described in more detail with reference to FIG. 3.

FIG. 3 is a view schematically illustrating a partially played-back image file according to an exemplary embodiment of the present invention. FIG. 3 illustrates two image files A and B.

In FIG. 3, the image files are depicted in a bar shape. The entire length represents the "total playback time" and the shaded portion represents the "elapsed playback time." Also, the start, stop, and end times are depicted.

As shown in FIG. 3, 40% of the image file A has been played back and 60% of the image file B has been played back. The playback time ratio of the image file B is higher than that of the image file A, but the "elapsed playback time" of the image file B is shorter than that of the image file A since the "total playback time" of the image file A is longer than that of the image file B.

In this embodiment, an image file having a relatively high playback time ratio is selected and deleted. Accordingly, the image file B is selected as a deletion target image file since although its elapsed playback time is shorter than that of the image file A, its playback time ratio is higher than that of image file A.

As described above, in this embodiment, at least one deletion target image file is selected from the stored image files such that an image file having a relatively high playback time ratio is firstly deleted, but this is merely an example for the convenience of explanation and any other method may be adopted to select a deletion target image file.

For example, at least one deletion target image file is selected from the stored image files such that an image file having a relatively long elapsed playback time is firstly deleted. In that case, the image file A is selected as a deletion target image file since its elapsed playback time is longer than that of image file B.

Also, in this embodiment, a PVR exemplifies the image apparatus according to the exemplary embodiment of the present invention. However, this is merely an example for the convenience of explanation. Accordingly, the present invention is applicable to any device that is capable of deleting stored image files.

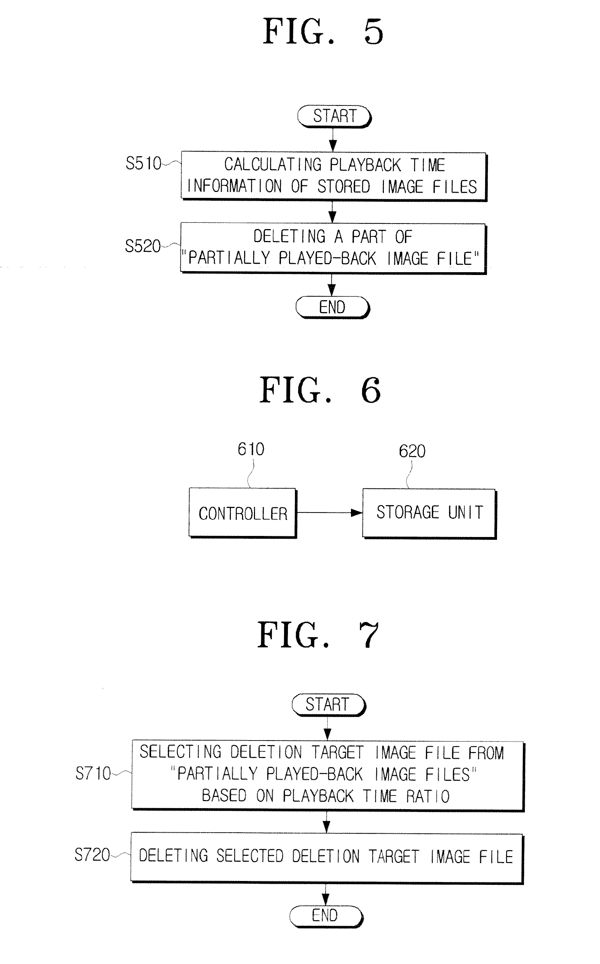

With reference to FIGS. 4 and 5, another exemplary embodiment of the present invention will now be described.

FIG. 4 is a block diagram illustrating an image apparatus according to another exemplary embodiment of the present invention. As shown in FIG. 4, the image apparatus according to another exemplary embodiment of the present invention comprises a controller 410 and a storage unit 420. The storage unit 420 stores image files. The controller 410 deletes a part of a partially played-back image file, which is an image file having a once played-back part for the total playback time, from the stored image files.

FIG. 5 is a flowchart illustrating a method for managing image files to delete a partially played-back image file according to another exemplary embodiment of the present invention. According to the method for managing image files as shown in FIG. 5, the image apparatus obtains playback time information of image files stored in the storage unit 420 (S510). Based on the playback time information, the image apparatus deletes a part of a partially played-back image file, which is an image file having a once played-back part, from the stored image files.

Hereinafter, still another exemplary embodiment of the present invention will now be described with reference to FIGS. 6 and 7.

FIG. 6 is a block diagram illustrating an image apparatus according to still another exemplary embodiment of the present invention. As shown in FIG. 6, the image apparatus comprises a controller 610 and a storage unit 620.

The storage unit 620 stores image files and the controller 610 selects at least one deletion target image file from the stored image files based on a playback time ratio of a partially played-back image file, which is an image file having a once played-back part, and deletes the selected deletion target image file from the storage unit 620.

FIG. 7 is a flowchart illustrating a method for managing image files to delete a partially played-back image file according to still another exemplary embodiment of the present invention. According to the method for managing image files as shown in FIG. 7, the image apparatus selects at least one selection target image file from among stored image files based on a playback time ratio of a partially played-back image file, which is an image file having a once played-back part (S710), and deletes the selected deletion target image file (S720).

According to this embodiment, a method for managing image files to delete a partially played-back image file and an apparatus employing the same can be provided.

As described above, the method for managing image files to delete a partially played-back image file and the image apparatus employing the same according to exemplary embodiments of the present invention enable a user to manage the image files more easily and more effectively.

Particularly, since the part that has been once played back is deleted, a part that a user has not still watched is prevented from being deleted.

Also, since the playback time ratio is taken into consideration in deleting an image file and thus an image file the user has almost entirely watched is firstly deleted, a storage space is more effectively utilized.

The foregoing exemplary embodiments and advantages are merely exemplary and are not to be construed as limiting the present invention. For example, the present teaching can be readily applied to other types of apparatuses.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for managing image files, comprising:
calculating playback time information about stored image files; and
based on the playback time information, deleting a part of a partially played-back image file, which is an image file having a once played-back part, from the stored image files.

2. The method as claimed in claim 1, wherein, the deleting comprises deleting the part of the partially played-back image file if a remaining capacity required to store image files is less than a predetermined value.

3. The method as claimed in claim 1 or 2, wherein the deleted part of the partially played-back image file is the once played-back part of the partially played-back image file.

4. The method as claimed in claim 1, 2 or 3, wherein the playback time information comprises a stop time indicating when a playback is stopped, and the deleting comprises deleting the part of the partially played-back image file based on a start time and the stop time of the partially played-back image file.

5. The method as claimed in claim 4, wherein the stop time is calculated based on an index file or packet element stream (PES) header information pertaining to the partially played-back image file.

6. The method as claimed in claim 5, wherein the PES header information comprises a presentation time stamp (PTS) value.

7. The method as claimed in any preceding claim, further comprising selecting at least one deletion target image file from the partially played-back image files based on a playback time ratio which is a ratio of an elapsed playback time to a total playback time of the partially played-back image file, wherein the deleting comprises deleting a part of the selected deletion target image file.

8. The method as claimed in claim 7, wherein the selecting comprises selecting at least one deletion target image file from among the partially played-back image files based at least in part on how high the playback time ratio of each stored image file is in comparison to the playback time ratios of other stored image files.

9. The method as claimed in claim 7, wherein the elapsed playback time is calculated by dividing a difference between a start frame count and a stop frame count by a frame frequency.

10. The method as claimed in claim 9, wherein the start frame count and the stop frame count are calculated based on the PTS value which is part of the PES header information.

11. A method for managing image files, comprising:
selecting at least one deletion target image file from stored image files based on a playback time ratio of an partially played-back image file which is an image file having a once played-back part; and
deleting the selected deletion target image file.

12. The method as claimed in claim 11, wherein the selecting comprises selecting at least one deletion target image file from among the stored image files based at least in part on how high the playback time ratio of each stored image file is in comparison to the playback time ratios of other stored image files.

13. The method as claimed in claim 11, wherein the deleting comprises deleting the selected deletion target image file if a remaining capacity required to store image files is less than a predetermined value.

14. An image apparatus comprising:
a storage unit (420) which stores image files; and
a controller (410) which deletes a part of a partially played-back image file, which is an image file having a once played-back part, from the storage unit (420).

15. The image apparatus as claimed in claim 14, wherein, the controller (410) deletes the part of the partially played-back image file from the storage unit (420) if a remaining capacity of the storage unit (420) is less than a predetermined value.

16. The image apparatus as claimed in claim 14, wherein the deleted part of the partially played-back image file is the once played-back part of the partially played-back image file.

17. The image apparatus as claimed in claim 14, wherein the controller (410) deletes the part of the partially played-back image file based on a playback start time and a stop time of the partially played-back image file.

18. The image apparatus as claimed in claim 17, wherein the stop time is calculated based on an index file or packet element stream (PES) header information pertaining to the partially played-back image file.

19. The image apparatus as claimed in claim 14, wherein the image apparatus comprises a personal video recorder.

20. The image apparatus as claimed in claim 14, wherein the controller (410) selects at least one deletion target image file from the partially played-back image files based on a playback time ratio which is a ratio of an elapsed playback time to a total playback time of the partially played-back image file, and deletes a part of the selected deletion target image file from the storage unit (420).

21. The image apparatus as claimed in claim 20, wherein the controller (410) selects at least one deletion target image file from the partially played-back image files based at least in part on how high the playback time ratio of each stored image file is in comparison to the playback time ratios of other stored image files.

22. An image apparatus comprising:
a storage unit (620) which stores image files; and
a controller (610) which selects at least one deletion target image file from the stored image files based on a playback time ratio of a partially played-back image file which is an image file having a once played-back part, and deletes the selected deletion target image file from the storage unit (620).

23. The image apparatus as claimed in claim 22, wherein the controller (610) selects at least one deletion target image file among from the stored image files based at least in part on how high the playback time ratio of each stored image file is in comparison to the playback time ratios of other stored image files.

24. The image apparatus as claimed in claim 22, wherein, the controller (610) deletes the selected deletion target image file from the storage unit (620) if a remaining capacity of the storage unit (620) is less than a predetermined value.
